# EUROPEAN PATENT APPLICATION

(11) **EP 0 867 654 A2**
(43) Date of publication of application: **30.09.1998**
(21) Application number: 98300486.2
(22) Date of filing: 23.01.1998
(51) Int. Cl.: F16L 55/18, B29C 63/34

(54) **Pipe liners and pipe lining**

(30) Priority: 24.01.1997 GB 9701520
(71) Applicant: Lippiatt, Raymond, Rainsbury, Wiltshire SN8 2RG (GB)
(72) Inventor: Lippiatt, Raymond, Rainsbury, Wiltshire SN8 2RG (GB)
(74) Representative: Hutchins, Michael Richard

(57) **Abstract**

The invention provides a thermoplastic pipe liner termination at an end of a host pipe 1 wherein the liner 2 extends beyond the end of the host pipe 1 and including an axially extending member 11 to the host pipe arranged to fit around the liner 2, comprising at its radially innermost portion, an axially inwardly extending annular tongue 16 separated from an outer portion of the axial extension, the annular gap 17 between the tongue 16 and the outer portion of the extension providing a space or gap within which the end portion of the liner 2 is located. The liner termination preferably comprises a radially extending clamping means 12 disposed about the axially extending member 11, a rigid annular member disposed radially within the liner, and a resilient annular seal member between the liner 2 and the axially extending member 11.

## Description

This invention relates to pipe liners and pipe lining, and more especially to arrangements for providing a secure sealed termination to a pipe lining within and with respect to its host pipe.

It has now become a well known technology to provide a liner for pipes for various reasons. Thus the host pipe (which may be ferrous, plastic, cementitous or ceramic,) within which the liner is disposed, may be cracked and or damaged in some other way so it is no longer capable of transmitting a fluid without leakage.

Alternatively and additionally it may be desired to pass through a host pipe a fluid, such as a corrosive liquid, which would in itself damage the host pipe so that a liner of a material capable of withstanding the corrosive fluid must be disposed within the first pipe.

There have been proposed various techniques for disposing into such host pipes appropriate thermoplastic (typically polyethylene) liner pipes sealed and joined together along their length within their host pipe, which do however require that at the end of the host pipe adjacent, for example a coupling disposed thereat, the liner pipe is anchored and additionally necessarily sealed to prevent either the ingress of material, usually liquid, from outside the liner into the volume within it, and, more usually, to prevent the egress of the fluid carried by the liner pipe out of the liner pipe into the gap between the liner pipe and the host pipe, which could then leak through cracks in the host pipe, or corrode the host pipe.

Various arrangements have been proposed in which the liner protrudes beyond the pipe within which it is situated and is then sealed with respect to the seal between two host pipes.

Problems have arisen with this arrangement in that there is often a dependency into the pipe system of the liner pipe, upsetting the flow of liquid therewithin, together with problems of lack of certainty that the liner has been satisfactorily sealed and located at the end of the host pipe.

It is an object of the present invention to overcome or at least substantially reduce the above mentioned disadvantage.

In accordance with one aspect of the present invention there is provided a thermoplastic pipe liner termination at an end of a host pipe wherein the liner pipe extends somewhat beyond the end of the host pipe and including an axially extending member to the host pipe arranged to fit around the liner, comprising at its radially innermost portion, an axially inwardly extending annular tongue separated from an outer portion of the axial extension, the annular gap between the tongue and the outer portion of the extension providing a space or gap within which the end portion of the liner is located.

In accordance with another aspect of the present invention there is provided a thermoplastic liner termination at an end of a host pipe wherein the liner extends beyond the end of the host pipe, including an annular collar abutting, directly or indirectly, the end of the host pipe, the collar being provided with a radially outer portion and a radially inner portion comprising an axially inwardly directed annular tongue of such dimensions that the end of the liner extending beyond the host pipe locates into the annular gap between the radially outer portion and the tongue of the collar; together with radially extending clamping means associated with the collar whereby to locate positively the liner with respect to the collar and hence the end of the host pipe.

Radially within the extending member or collar and additionally the tongue thereof, may be located an outwardly extending rigid annular member, such as a hoop, which may be formed of steel for example, of a rigid nature disposed radially within the liner, and arranged to bear radially outwardly against the tongue and hence the end of the liner so as to force the same radially outwardly into, for example, a recess groove having an appropriate and perhaps corresponding radius of curvature.

A resilient annular seal member, of rubber or synthetic rubber, may be located within the recess groove whereby the liner is sealed against the axial termination member or collar of the arrangement.

A clamp band may be provided radially outside and around the collar, having, for example, a screw threaded arrangement for securement about the collar whereby to clamp securely around the collar about the liner and its rigid hoop and its sealing member. The collar may comprise a split member whereby to ensure full compressive force by means of the clamp band radially inward upon the rigid hoop and the sealing member.

The sealing member may include an axially disposed radially extending portion to prevent annular pressurisation of the pipe, and may thereafter include a portion radially outward thereof extending axially so as to fit within the securement arrangement between two pipe members as hereinbefore defined.

In order that the invention may be more readily understood one embodiment thereof will now be described by way of reference with respect to the accompanying drawings in which:-
Figure 1 is a schematic sectional view of two pipes in which the left hand pipe incorporates an arrangement according to the present invention; and
Figure 2 illustrates in schematic section an enlarged portion of the left hand upper side of the arrangement of Figure 1.

It will be seen from the drawings that the left hand host pipe 1 incorporates a liner 2 which extends into the junction with the right hand unlined pipe 4, which may be of iron for example, the two pipes being connected together by means of a "Viking Johnson" (Registered Trade Mark) pipe coupling member 3.

The left hand pipe 1 includes a leakage or crack problem (not shown) which requires the provision of the liner 2 to prevent leakage therefrom or (just as important) leakage thereinto.

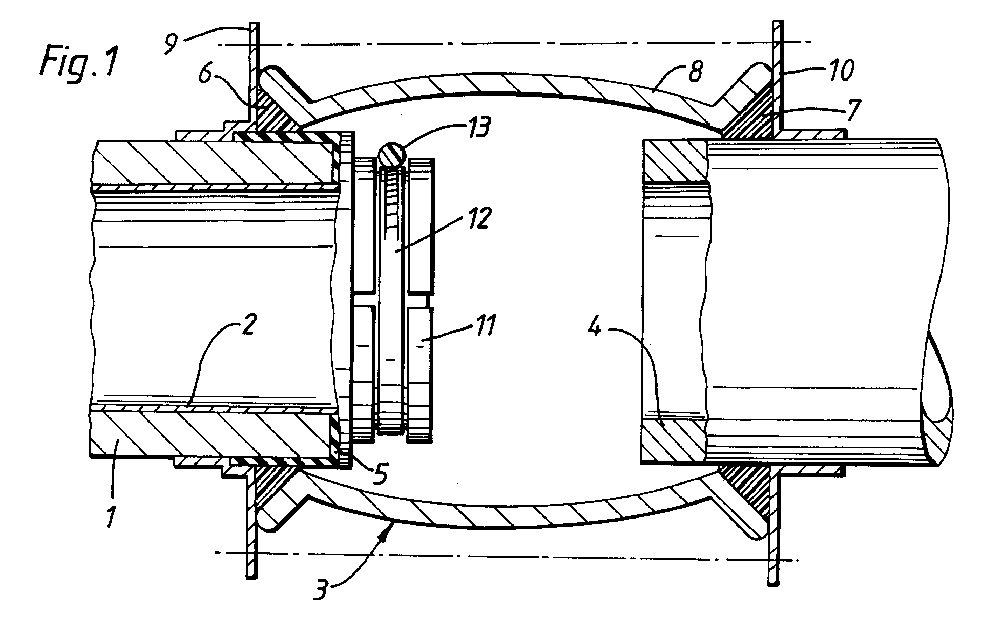

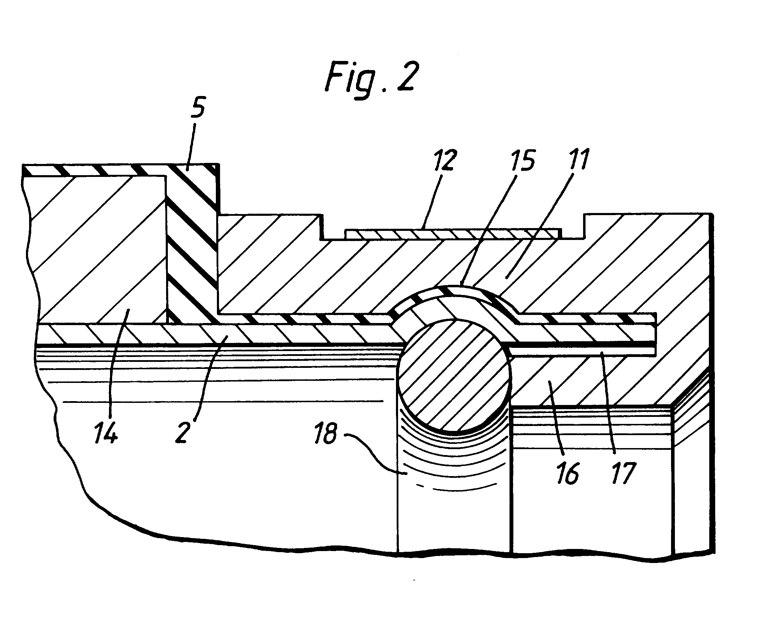

It will be seen from the drawings that the lined pipe 1 on the left hand side of the Figure 1 as is shown in Figure 1 and 2 incorporates an annular shaped rubber or synthetic rubber seal 5 having a rather convoluted configuration as is best seen in Figure 2. This prevents, in operation of the arrangement of the invention, any pressurisation of the annulus between the liner 2 and the host pipe 1 on the left hand side of the figures.

The two pipes are joined together by means of a standard pipe coupling typically identified as a "Viking Johnson" coupling, wherein annular gaskets 6, 7 are forced together underneath an annular cast iron member 8 between flange members 9, 10, so as to ensure that no leakage occurs between the lined pipe 1 and the unlined pipe 4.

The lined pipe incorporates an extension member or collar 1 1 formed of iron or appropriate plastics material which may conveniently be in two semi-circular portions which are held together by means of a clamp band 12 and appropriate securement member 13 with respect thereto; which may be in the nature of a Jubilee Clip.

The complexly disposed rubber or synthetic rubber seal 5 of annular nature arranged within the collar 11, can be seen from Figure 2, clearly extends radially within the clamp band and the securement member thereof.

As can also be seen from Figure 2, the annular rubber seal 5 extends from an area axially inwards of the lined pipe 1, through a right angle to extend over the end 14 of the lined pipe 1, and, at its junction with the liner extends axially therewith into a recess groove 15, with the liner, within the collar 11.

An important feature of the invention is the provision of a or tongue 16 of the axially extending end member or collar 1 1 of the lined pipe 1 which is disposed radially within the axial end of the collar, extending axially back towards the lined pipe 1, the annular gap 17 between the radial outward portion of the end member and the tongue 16 thereof being adequate to receive both the end portion of the liner 2 and in addition, the rubber seal 5.

Disposed within the collar is a rigid steel hoop 18 which, in practice, bears outwardly radially against both the rubber seal 5 and the liner 2 into the annular recess groove 15 formed within the radially outer portion of the collar 11. The clamp band 12 radially disposed about the collar 1 1 and secured by means of a securement screw 13 for example ensures that the rubber seal 5 and liner 2 are firmly located within the radially outwardly extending recess 15 of the collar 1 1 by means of the steel hoop 18 to ensure sealment and firm location of the rubber seal member 5 and additionally and, most importantly, the end portion of the liner 2 of the pipe 1.

It will be appreciated that the rigid hoop 18 illustrated in the arrangement hereinabove described is actively loaded by the clamp band 12 such as to ensure a very firm and positive location of the end of the liner and of the seal relating thereto.

In addition it is to be noted that the recess 15 has three primary functions as hereinafter described:-
1. the recess forces the liner end wall to go through a maximum feasible series of deviations in the radial axial plane and thereby provided maximum anchorage for the liner;
2. in addition the fitting prevents the liner extremity from depending radially inwards which could otherwise upset the flow of fluid through the pipe and pipe junction;
3. finally the tongue provides for correct axial positioning of the hoop member within the bore of the liner, with respect of the recess in the clamp rings prior to tightening the clamp band (at which time there is no way of sensing the precise relative locations of the hoop and recess). The latter advantage holds true even if the liner end is not cut evenly.

The invention, in the specific embodiment described above, is particularly appropriate for thin liners which may be readily distorted in the manner described by the hoop/groove specified. With a thicker liner such attributes can be achieved by heating.

It is to be understood that the foregoing is merely exemplary of pipe liner termination arrangements in accordance with the invention and that modifications can readily be made thereto without departing from the true scope of the invention.

## Claims

1. A thermoplastic pipe liner termination at an end of a host pipe wherein a liner pipe extends beyond the end of the host pipe, the termination including an axially extending (relative to the host pipe) member arranged to fit around the liner, the axially extending member comprising at its radially innermost portion, an axially inwardly extending annular tongue separated from an outer portion of the axially extending member, an annular gap between the tongue and the said outer portion providing a space or gap within which an end portion of the liner is located.

2. A thermoplastic liner termination at an end of a host pipe wherein the liner extends beyond the end of the host pipe, including an annular collar abutting, directly or indirectly, the end of the host pipe, the collar being provided with a radially outer portion and a radially inner portion comprising an axially inwardly directed annular tongue of such dimensions that the end of the liner extending beyond the host pipe locates into the annular gap between the radially outer portion and the tongue of the collar; together with radially extending clamping means associated with the collar whereby to locate positively the liner with respect to the collar and hence the end of the host pipe.

3. A thermoplastic liner termination according to claim 1 wherein there is provided a clamping means associated with the collar whereby to locate positively the liner with respect to the collar and hence the end of the host pipe.

4. A thermoplastic liner termination according to any one of the preceding claims wherein there is located radially within the extending member or collar and optionally the tongue thereof a rigid annular member disposed radially within the liner.

5. A thermoplastic liner termination according to claim 4 wherein the rigid annular member is a hoop.

6. A thermoplastic liner termination according to claim 5 wherein the hoop is formed from steel.

7. A thermoplastic liner termination according to any one of claims 4 to 6 wherein the rigid annular member is arranged to bear radially outwardly against the liner so as to force the same radially outwardly into a groove or recess.

8. A thermoplastic liner termination according to any one of the preceding claims wherein a resilient annular seal member is provided, the resilient annular seal member having a relatively reduced diameter portion for sealing about the end of the liner and a relatively enlarged diameter portion for sealing about the end of the host pipe.

9. A thermoplastic liner termination according to claim 8 wherein the relatively reduced diameter and relatively enlarged diameter portions are linked by a thicker radially extending portion.

10. A thermoplastic liner termination according to claim 8 or claim 9 wherein part of the relatively reduced diameter portion of the resilient annular seal member is disposed in a groove or recess in the radially inner surface of the radially outer portion of the collar.

11. A thermoplastic liner termination according to claim 7 wherein a resilient annular seal member is located within the recess or groove whereby the liner is sealed against the axial termination member or collar.

12. A thermoplastic liner termination according to any one claims 8 to 1 1 wherein the resilient annular seal member is formed of rubber or synthetic rubber.

13. A thermoplastic liner termination according to claim 1 1 or claim 12 wherein the sealing member includes an axially disposed radially extending portion to prevent annular pressurisation of the pipe

14. A thermoplastic liner termination according to claim 13 wherein the sealing member includes a portion (radially outward of the axially disposed radially extending portion) extending axially so as to fit within a securement arrangement between a host pipe and another pipe member.

15. A thermoplastic liner termination according to claim 4 and any claim dependent thereon wherein a clamp band is provided radially outside and around the collar whereby to clamp securely around the collar about the liner, the rigid hoop and the sealing member when present.

16. A thermoplastic liner termination according to claim 15 wherein the clamp band has a screw threaded arrangement for securement about the collar.

17. A thermoplastic liner termination according to any one of claims 2 to 16 wherein the collar comprises a split member.

18. A pipe coupling comprising a pipe coupling sleeve, a host pipe secured within an end of the pipe coupling sleeve and a liner disposed within the host pipe, the liner being provided with a liner termination as defined in any one of the preceding claims.

19. A pipe coupling according to claim 18 wherein the liner termination is as defined in any one of claims 8 to 14 wherein the resilient annular seal member has a portion which is sealingly disposed between the host pipe and the pipe coupling sleeve.
